# EUROPÄISCHE PATENTANMELDUNG

(11) **EP 4 714 745 A1**
(43) Veröffentlichungstag der Anmeldung: **25.03.2026**
(21) Anmeldenummer: 24201640.0
(22) Anmeldetag: 20.09.2024
(51) Int. Cl.: B60Q 1/26, B60J 10/24, B60J 10/248, B60J 10/27, B60J 10/273, B60Q 1/32, F21S 43/20, F21S 43/27, B60J 10/265, B60J 10/80, E06B 7/16

(54) **SICHERHEITSPROFILLEISTE FÜR EINE TÜR ODER EIN FENSTER EINES TRANSPORTMITTELS**

(71) Anmelder: Hübner GmbH & Co. KG, 34123 Kassel (DE)
(72) Erfinder: Krug, Lars, 34376 Immenhausen (DE); Breuninger, Martin, 89233 Neu-Ulm (DE)

(57) **Zusammenfassung**

Die Erfindung betrifft eine Sicherheitsprofilleiste (10) für eine Tür oder ein Fenster eines Transportmittels, eines Bahn- oder Bussteiges oder für ein Tor oder eine Schranke, wobei die Sicherheitsprofilleiste (10) einen Basiskörper (12) aufweist, wobei der Basiskörper (12) mindestens einen Verbindungsabschnitt (14) aufweist, wobei die Sicherheitsprofilleiste wenigstens ein Licht emittierendes Mittel (20) aufweist, wobei die Sicherheitsprofilleiste eine wenigstens teilweise transluzente und von dem Basiskörper separate Abdeckung (16) aufweist, welche mindestens einen Gegenverbindungsabschnitt (18) umfasst, wobei der Verbindungsabschnitt (14) und der Gegenverbindungsabschnitt (18) miteinander verbunden sind, wobei zumindest eine Oberfläche des Basiskörpers (12) und die Abdeckung (16) eine erste Hohlkammer (22) definieren, in der das Licht emittierende Mittel (20) im Querschnitt quer zur Längsrichtung der Sicherheitsprofilleiste gesehen aufgenommen ist. Die Erfindung betrifft außerdem ein Fenster- oder Türelement mit einer solchen Sicherheitsprofilleiste, ein Schienen- oder Straßenfahrzeug oder Bahn- oder Bussteig mit einem Fenster- oder Türelement mit einer solchen Sicherheitsprofilleiste sowie ein Verfahren zur Herstellung einer solchen Sicherheitsprofilleiste.

## Beschreibung

Die Erfindung betrifft eine Sicherheitsprofilleiste für eine Tür oder ein Fenster eines Transportmittels, eines Bahn- oder Bussteiges oder für ein Tor oder eine Schranke. Weiter betrifft sie ein Fenster- oder Türelement mit einer Sicherheitsprofilleiste sowie ein Schienen- oder Straßenfahrzeug bzw. einen Bahn- oder Bussteig mit einem solchen Fenster- oder Türelement. Darüber hinaus betrifft die Erfindung ein Verfahren zur Herstellung einer Sicherheitsprofilleiste. Insbesondere betrifft die Erfindung eine Sicherheitsgummiprofilleiste, die eine vorgegebene Flexibilität oder Elastizität aufweist.

Sicherheitsprofilleisten, zum Beispiel aus Gummi oder einem Elastomer, haben, beispielsweise in Fahrzeugen, herkömmlich die Aufgabe, eine Abdichtung zwischen einer Tür und eines Rahmens bzw. einer anderen Tür bereitzustellen. Daher sind die Sicherheitsprofilleisten an Rändern von Aluminium- oder Stahl-Türprofilen angebracht.

Aufgrund der gestiegenen Anforderungen an Transportmittel und aufgrund von erhöhten Sicherheitsvorschriften können Sicherheitsprofilleisten neben ihrer Abdichtfunktion durch ihre Elastizität auch eine oder mehrere Signalgeberfunktionen aufweisen. So sind in viele Sicherheitsprofilleisten Kontaktelemente integriert, die einen Kontakt mit einem Gegenstand oder einem Benutzenden anzeigen und ggf. eine Bewegung der Tür oder des beweglichen Elements unterbrechen oder stoppen. Darüber hinaus sind Sicherheitsprofilleisten bekannt, die eine Lichtgitteranordnung aufweisen, mit der ein Raum um die sich bewegende Tür herum kontaktlos überwacht wird, indem ein nicht sichtbares Licht ausgesendet und empfangen wird. Basierend auf Veränderungen des empfangenen Lichts kann auf einen Gegenstand oder eine Person innerhalb des Bewegungsbereichs der Tür geschlossen werden und eine entsprechende Steuerung vorgenommen werden.

### STAND DER TECHNIK

Aus dem Dokument RU 2 789 015 C1 ist es bekannt, in einem Transportmittel Signallampen in Aluminium- oder Stahl-Türprofile zu integrieren.

Aus den Dokumenten FR 3 051 732 A1 oder EP 3 894 744 A1 ist es bekannt, eine Einsatzleiste mit einem darin aufgenommenen Leuchtmittel in eine Aufnahme einer Sicherheitsprofilleiste einzuziehen. Diese zusätzliche Einsatzleiste an sich ist transluzent, sodass das Leuchtmittel durch das transluzente Profil hindurchstrahlen kann.

### AUFGABE DER ERFINDUNG UND LÖSUNGSBESCHREIBUNG

Aufgabe der Erfindung ist es, eine Sicherheitsprofilleiste mit Signalfunktion aufzuzeigen, die leicht nachrüstbar und/oder austauschbar ausgestaltet ist, wobei dennoch ein ausreichender Schutz vor Umwelteinflüssen und/oder Vandalismus gewährleistet sein soll.

Die Aufgabe wird durch die Merkmale der unabhängigen Ansprüche gelöst. Vorteilhafte Ausgestaltungen sind den Unteransprüchen zu entnehmen.

Der Erfindung liegt die Erkenntnis zugrunde, dass bei den aus dem Stand der Technik bekannten Sicherheitsprofilleisten die lichtemittierenden Mittel durch die Anbringung am Türprofil bzw. Einbettung in eine Einsatzleiste nur schwer zugänglich und deren Montage und Austausch entsprechend aufwändig ist. Zur Lösung der Aufgabe wird daher vorgeschlagen, an der Sicherheitsprofilleiste eine Hohlkammer für ein Licht emittierendes Mittel vorzusehen, in der dieses sicher aufgenommen ist, welche jedoch gleichzeitig zum Beispiel für einen Austausch des Lichts emittierenden Mittels leicht zu öffnen und erneut zu verschließen ist.

Eine erfindungsgemäße Sicherheitsprofilleiste kann an einer Tür oder einem Fenster eines Transportmittels zum Schutz vor einem Hineingreifen und Einklemmen angebracht werden. Als Transportmittel im Sinne der Erfindung sind insbesondere Nutzfahrzeuge, Fahrstühle, Flugzeuge oder Seilbahngondeln zu verstehen. Die erfindungsgemäße Sicherheitsprofilleiste wird vorzugsweise an Türen oder anderen beweglichen Elementen von Transportmitteln eingesetzt, um Personen, die die Transportmittel benutzen, vor einem Einklemmen in diesem beweglichen Element zu schützen, gleichzeitig auch um eine Bewegung oder allgemein einen Zustand der Tür bzw. des beweglichen Elements zu signalisieren. Ein ähnlicher Einklemm-Schutz lässt sich realisieren, wenn die erfindungsgemäße Sicherheitsprofilleiste an einer Tür oder einem Fenster eines Bahnsteiges oder Bussteiges zum Einsatz kommt, damit auch dort wartende Fahrgäste beispielsweise bei einer Fehlfunktion einer Bahnsteigtür vor potenziellen Verletzungen durch ein plötzliches Schließen der Tür geschützt werden können.

Die Sicherheitsprofilleiste umfasst einen Basiskörper. Dieser hat üblicherweise eine längliche Form und kann im Querschnitt eine beachtliche Formenvielfalt aufweisen. Dabei kann der Basiskörper beispielsweise eine rechteckige oder nahezu rechteckige, eine runde oder nahezu runde, eine drei-, vier-, fünf- oder vieleckige Form oder eine Mischung aus diesen aufweisen. Seine ihn begrenzenden Außenflächen können beispielsweise aus einer abgerundeten oder ovalen Fläche und einer oder mehrerer gerader Flächen bestehen. Der Basiskörper kann an einer Kante eines bevorzugt beweglichen Elements, beispielsweise einer Tür, angefügt sein.

Der Basiskörper weist erfindungsgemäß einen Verbindungsabschnitt auf. Dieser kann der Verbindung zu einem Gegenverbindungsabschnitt dienen. Der Verbindungsabschnitt kann ein randseitiger Teil des Basiskörpers sein und dieselbe Beschaffenheit wie der restliche Teil oder bestimmte andere Teile des Basiskörpers aufweisen. Er kann sich in der Beschaffenheit, beispielsweise im Material, der Rauheit, der Dichte, der Farbe, der Härte, der Festigkeit, der Elastizität, der elektrischen oder der Wärmeleitfähigkeit aber auch von angrenzenden nicht dem Verbindungsabschnitt zuordbaren Teilen des Basiskörpers unterscheiden.

Außerdem weist die Sicherheitsprofilleiste ein lichtemittierendes Mittel auf. Es kann sich dabei um eine einzelne Lichtquelle, mehrere Lichtquellen und/oder ein lichtführendes Element handeln.

Daneben weist die Sicherheitsprofilleiste eine wenigstens teilweise, eventuell auch vollständig transluzente und von dem Basiskörper separate Abdeckung auf. Separat bedeutet an dieser Stelle, dass die Abdeckung ein von dem Basiskörper getrenntes und eigenständig existierendes Bauteil ist, welches eine grundlegend andere Beschaffenheit, ein anderes Aussehen oder anderes Material hat verglichen mit dem Basiskörper. Im Falle einer Wartung kann die Abdeckung mit geringem Aufwand von dem Basiskörper gelöst werden. Die Abdeckung kann aus einem Kunststoff, beispielsweise einem Elastomer wie einem Ethylen-Propylen-Dien-Kautschuk, einem chlorsulfinierten Polyethylen, einem Polyvinylchlorid, einem high-density-Polyethylen, einem Nitril- oder einem Butylkautschuk oder einer Mischung aus diesen bestehen. Die Abdeckung ist jedoch nicht auf ein bestimmtes Material beschränkt und kann unter anderem auch aus einem transluzenten Thermoplast, wie Polystyrol, Acrylglas oder Polycarbonat bestehen. Die Abdeckung kann die Form einer Folie oder einer Membran haben beziehungsweise nach Art einer Folie oder einer Membran ausgestaltet sein. Sie kann dabei eine dünne, flächige Struktur aufweisen. Die Folie könnte beispielswiese aus flexiblem Kunststoff hergestellt sein. Die Gestaltung der Abdeckung kann zur Vandalismusvorbeugung beitragen, da dahinterliegende Bauteile für die Abdeckung von außen Betrachtende nicht sichtbar und/oder zumindest nicht direkt zugänglich sind.

Die Abdeckung weist erfindungsgemäß einen Gegenverbindungsabschnitt auf. Dieser kann, analog zum Verbindungsabschnitt, ein randseitiger Teil der Abdeckung oder auch mit der gesamten Abdeckung deckungsgleich sein und dieselbe Beschaffenheit wie der restliche Teil oder bestimmte andere Teile der Abdeckung aufweisen. Er kann sich in der Beschaffenheit, beispielsweise im Material, der Rauheit, der Dichte, der Farbe, der Härte, der Festigkeit, der Elastizität, der elektrischen oder der Wärmeleitfähigkeit aber auch von angrenzenden nicht dem Gegenverbindungsabschnitt zuordbaren Teilen der Abdeckung unterscheiden.

Die Richtung der Längserstreckung des Basiskörpers der Sicherheitsprofilleiste kann als x-Richtung, die 90 Grad darauf stehenden Richtungen des Basiskörpers als y- und z-Richtung (Breite und Höhe) bezeichnet werden.

Erfindungsgemäß sind der Gegenverbindungsabschnitt und der Verbindungsabschnitt miteinander verbunden oder verbindbar. Der Gegenverbindungsabschnitt der Abdeckung wird mit dem Verbindungsabschnitt des Basiskörpers verbunden, sodass aus der randseitigen, offenen Ausnehmung des Basiskörpers eine (zumindest im Querschnitt quer zur Längsrichtung, also in der y-z-Ebene gesehen) geschlossene Hohlkammer wird. Die Verbindung der Bauteile Basiskörper und Abdeckung ergibt ein neues Bauteil. Dieses neue zusammengesetzte Bauteil ist ausdrücklich aus zwei ursprünglich separaten Bauteilen, nämlich dem Basiskörper und der Abdeckung, d. h. nicht einstückig hergestellt. Die Hohlkammer kann neben der Oberfläche des Basiskörpers und der Abdeckung auch noch durch weitere, zusätzliche Bauteile definiert werden.

Indem das lichtemittierende Mittel in der Hohlkammer an dem Sicherheitsprofil aufgenommen ist, wird - anders als bei aus dem Stand der Technik bekannten Lösungen wie der Integration von Signalelementen - nicht die Steifigkeit von Türprofilen beeinflusst. Weiter kann das lichtemittierende Mittel einfach montiert werden, da es in Längsrichtung in die durch Verbindungsabschnitt und Gegenverbindungsabschnitt erzeugte Hohlkammer eingebracht, zum Beispiel eingezogen, wird. Solange die Hohlkammer in einer der drei Achsen nicht oder nicht vollständig verschlossen ist, können Schritte wie das Einbringen, Ausrichten, Befestigen oder elektrisches Kontaktieren des lichtemittierenden Mittels unaufwändig erfolgen.

Zudem lässt sich bei einem ein- oder beidseitig abstrahlenden Profil eine Unterscheidung einer Lichtabgabe beispielsweise zwischen dem Innenraum und dem Äußeren eines Fahrzeugs treffen.

Alternativ zum Einsatz an einer Tür oder einem Fenster eines Transportmittels ist auch eine Verwendung an einem Rolltor oder in einer Parkplatzschranke möglich. Diese Aufzählung über die Einsatzmöglichkeiten der Sicherheitsprofilleiste ist beispielhaft und stellt keine vollständige Liste dar. Im Folgenden wird aufgrund einer einfacheren Lesbarkeit von einer Sicherheitsprofilleiste an einer Tür eines Transportmittels, beispielsweise eines Schienen- oder eines Straßenfahrzeugs, gesprochen.

In einer Ausführungsform der Erfindung ist die Verbindung zwischen dem Verbindungsabschnitt und dem Gegenverbindungsabschnitt stoffschlüssig und/oder formschlüssig.

Bei einer stoffschlüssigen Verbindung werden die Materialien der beiden Abschnitte so miteinander verbunden, dass sie eine feste und/oder strukturelle Einheit bilden. Die stoffschlüssige Verbindung der beiden Abschnitte besticht durch ihre Bindung zwischen den Molekülen im Material. Dies kann durch Kleben, eine Vulkanisation oder andere Verfahren erreicht werden. Die beiden Abschnitte bilden hier eine starke Verbindung; diese weist bei homogener Struktur eine hohe Festigkeit auf, ist widerstandsfähig gegenüber hohen Temperaturen, chemischen Einwirkungen und anderen Umwelteinflüssen und damit beständig gegenüber Alterung und langlebig. Durch die Auswahl spezifischer Vulkanisationsmittel und Prozessparameter wie der Oberfläche und Transluzenz der Abschnitte beziehungsweise der Abdeckung können die Eigenschaften des Endprodukts gezielt angepasst werden. Muss das Licht für ein bestimmtes Erscheinungsbild beispielsweise mehr gebrochen werden, um einzelne Spots auszublenden, dann muss die Funktion der Abdeckung auch die eines Streukörpers übernehmen. Hier werden für die Materialauswahl der Abdeckung also bereits verschiedene Zusatz- oder Füllstoffe wie z.B. Streupartikel berücksichtigt. Die Diffusion des Lichts sorgt für eine gleichmäßige Ausleuchtung.

Formschlüssige Verbindungen sind Verbindungen, bei denen die Übertragung von Kräften und Momenten durch das Ineinandergreifen von Bauteilen erfolgt. Dies bedeutet, dass die Form der Verbindungselemente so gestaltet ist, dass sie sich gegenseitig blockieren und dadurch eine Bewegung verhindern. Formschlüssige Verbindungen sind sicher, da sie selbst bei Ausfall anderer Kräfte (wie Reibung) bestehen bleiben. Sie sind wenig anfällig für Lockerungen durch Vibrationen oder andere externe Einflüsse. Die formschlüssige Verbindung des Verbindungs- mit dem Gegenverbindungsabschnitt ist leicht zu montieren und zu demontieren. Dies vereinfacht Wartungs- und Reparaturarbeiten und ermöglicht eine effiziente Handhabung. Verbindungs- und Gegenverbindungsabschnitt können präzise zueinander positioniert werden. Durch das direkte Ineinandergreifen ist keine zusätzliche Vor- oder Eigenspannung wie bei einer kraftschlüssigen Verbindung nötig.

Die formschlüssige Verbindung kann durch eine Klemmverbindung, beispielsweise durch Einspannen der Abdeckung zwischen vorstehenden Absätzen, oder auch durch eine Schnappverbindung oder eine Rastverbindung realisiert werden, bei der der Gegenverbindungsabschnitt spezielle Rastnasen aufweist, die in entsprechende Vertiefungen des Verbindungsabschnitts einrasten, auch eine umgekehrte Anordnung ist möglich. Bei allen formschlüssigen Verbindungen können sowohl der Verbindungsabschnitt als auch der der Gegenverbindungsabschnitt der "männliche", genau wie der "weibliche" Verbindungspartner, also beispielsweise Stift und Buchse sein.

In einer Ausführungsform der Erfindung ist in dem Basiskörper mindestens eine randseitige Ausnehmung ausgebildet, in der das Licht emittierende Mittel bevorzugt angeordnet ist. Der Gegenverbindungsabschnitt der Abdeckung wird mit dem Verbindungsabschnitt des Basiskörpers verbunden, sodass aus der randseitigen, offenen Ausnehmung des Basiskörpers eine geschlossene Hohlkammer wird. Diese Ausnehmung kann als eine Art Lichtkanal dienen, der das Licht von der Lichtquelle zur Oberfläche der Sicherheitsprofilleiste führt. Der Lichtkanal entsteht beispielsweise durch Blocken des Lichtdurchtritts durch den opaken, also lichtundurchlässigen Basiskörper und/oder durch Umlenken des Lichts mit Hilfe von Reflektoren an den Innenwänden in Richtung des transluzenten Austrittsbereichs. Außerdem ist die Ausnehmung geeignet zum Aufnehmen und zum Befestigen des Licht emittierenden Mittels. Das Licht emittierende Mittel kann in der Hohlkammer möglichst gut vor äußeren Einflüssen geschützt werden.

Gemäß einer möglichen Ausführungsform besitzt der Basiskörper für die Aufnahme des lichtemittierenden Mittels keine Ausnehmung, sondern eine flache oder zumindest im Wesentlichen flache Oberfläche. Hier weist stattdessen die Abdeckung eine Wölbung auf, wodurch beim Verbinden des Verbindungsabschnittes mit dem Gegenverbindungsabschnitt eine Hohlkammer erzeugt wird. Dies hat den Vorteil, dass nicht verschiedene Basiskörper für verschiedene Licht emittierende Mittel vorgehalten werden müssen, sondern die Variantenvielfalt bei den Hohlkammern für die Licht emittierenden Mittel durch die unterschiedlich gewölbten Abdeckungen gewährleistet werden kann.

Gemäß einer möglichen Ausführungsform weist die Sicherheitsprofilleiste eine Mehrzahl, beispielsweise drei oder vier randseitige Ausnehmungen auf, wodurch Licht aus mehreren Hohlkammern oder aus einer mehrere randseitige Ausnehmungen verbindenden Hohlkammer abgestrahlt werden kann. Diese Ausnehmungen sind vorzugsweise parallel und beabstandet zueinander in Längsrichtung des Basiskörpers angeordnet. Dies fügt zusätzliche Optionen bei der Signalgebung hinzu.

In einer besonderen Ausführungsform der Erfindung ist die Abdeckung und/oder der Basiskörper aus einem ganz oder teilweise elastischen Material hergestellt. Durch die elastischen Materialien kann die Sicherheitsprofilleiste an verschiedene Oberflächen und Formen angepasst werden. Wenn die Sicherheitsprofilleiste aus einem solchen Material besteht, kann sie als Puffer dienen und empfindliche Bereiche vor Beschädigungen bei Stößen, Vibrationen oder anderen mechanischen Belastungen schützen. Elastische Materialien sind oft leichter zu handhaben und zu montieren. Dies ist besonders wichtig, wenn die Sicherheitsprofilleiste nachgerüstet oder ausgetauscht werden muss. Eine relevante Eigenschaft der elastischen Materialien ist ihre Dichtwirkung. Elastische Materialien wie die synthetischen Gummis Nitrilkautschuk und Butylkautschuk, EPDM und Silikon sind zudem beständig gegenüber Feuchtigkeit, UV-Strahlung und anderen Umwelteinflüssen. Außerdem können brandhemmende oder UV-stabilisierende Zusatzstoffe in den Materialien enthalten sein.

In einer Ausführung der Erfindung wird für den Basiskörper und/oder die Abdeckung der Sicherheitsprofilleiste ein opakes Material verwendet. Opake Materialien sind lichtundurchlässig und helfen daher dabei, das von dem Licht emittierenden Mittel ausgesendete Licht besser zu kanalisieren. Im Stand der Technik existieren viele Lösungen, in denen das Licht emittierende Mittel mit ausschließlich transluzentem Material umgeben ist, was keinerlei Begrenzung der Lichtausstrahlung und damit beispielsweise keinerlei Unterscheidung zwischen Signalen auf der Innen- und der Außenseite eines Fahrzeuges erlaubt. Einen Teil der Hohlkammer zwischen Basiskörper und Abdeckung mit einem transluzenten, einen anderen Teil mit einem opaken Material zu begrenzen, ist also für viele Anwendungsfälle vorteilhaft. Wenn die Sicherheitsprofilleiste als Signalgeber oder Warnleuchte dient, kann ein opakes Material dazu beitragen, Blendung zu reduzieren. Es verhindert, dass das Licht zu stark in die Umgebung strahlt und die Sicht beeinträchtigt. Opake Materialien können dazu beitragen, unansehnliche Komponenten zu verbergen. Wenn die Sicherheitsprofilleiste an öffentlichen Orten oder in Innenräumen verwendet wird, kann ein opakes Material dazu beitragen, ein sauberes und unauffälliges Erscheinungsbild zu gewährleisten. Opake Materialien wie allgemein Gummi oder andere Kunststoffe wie Polyethylen oder Polyvinylchlorid bieten außerdem einen gewissen Schutz vor UV-Strahlung. Dies kann die Lebensdauer der Sicherheitsprofilleiste verlängern, insbesondere im Außenbereich.

Weitere Varianten der Erfindung beschreiben Sicherheitsprofilleisten mit beliebig komplexen Strukturen um die Hohlkammer mit dem Licht emittierenden Mittel. Beispielsweise können auch über den Umfang der Hohlkammer in ihrem Querschnitt gesehen mehrere, auch eine Vielzahl von opaken und transluzenten Abschnitten existieren, wobei opake wie auch transluzente Abschnitte sowohl Teil der Abdeckung als auch Teil des Basiskörpers sein können. Die Anordnung und damit gezielte Blockierung sowie Führung des Lichts kann dazu verwendet werden, bestimmte Bereiche der Hohlkammer zu verdecken oder das Licht gezielt zu blockieren.

Durch die jeder elastischen Sicherheitsprofilleiste innewohnende Abdichtungseigenschaft wird eine Integration von weiteren Elementen verschiedener Funktionen in die Profilleiste begünstigt, da insbesondere im Bereich der Transportmittel ein Einsatz in einer feuchten Umgebung mit großen Temperaturschwankungen und auch mit mechanischen Beanspruchungen erfolgt, der eine ausreichende Abdichtung insbesondere von elektrischen Elementen erfordert. Dies ist speziell für eine lange Haltbarkeit der Sicherheitsvorrichtungen notwendig.

Die Integration weiterer Hohlkammern in die Sicherheitsprofilleiste eröffnet zusätzliche Möglichkeiten und Funktionen. In einer Ausführungsform der Erfindung ist eine zweite Hohlkammer für eine Druckerfassungseinrichtung oder einen elektrischen Kontaktgeber vorgesehen. Wenn die Sicherheitsprofilleiste eine Druckerfassungseinrichtung enthält, kann diese dazu dienen, bestimmte Informationen zu erfassen oder zu überwachen. Beispielsweise kann durch die Druckerfassungseinrichtung ein Druck auf die Profilleiste gemessen werden, der auf ungewöhnliche Belastungen oder Vandalismus hinweisen kann. Ein elektrischer Kontaktgeber kann als Schalter oder Sensor fungieren. Wenn die Sicherheitsprofilleiste mit einem solchen Kontaktgeber ausgestattet ist, kann auf bestimmte Ereignisse reagiert werden. Zum Beispiel kann der Kontaktgeber bei Berührung aktiviert werden. Die zweite Hohlkammer kann vielseitig genutzt werden. Sie kann zur Integration von Sicherheitssystemen, Beleuchtungskontrollen oder verschiedenster Sensoren dienen. Je nach Anforderungen können verschiedene Komponenten in diese Hohlkammer eingebaut werden. Eine Druckerfassungseinrichtung und/oder ein elektrischer Kontaktgeber kann auch zusammen mit dem Licht emittierenden Mittel in der ersten Hohlkammer eingesetzt oder anderweitig im Bereich des Basiskörpers untergebacht werden. Eine eigene Hohlkammer für eine Druckerfassungseinrichtung oder einen elektrischen Kontaktgeber kann aber auch gewisse Vorteile mit sich bringen, etwa wenn nur das Licht emittierende Mittel oder nur die Druckerfassungseinrichtung ausgetauscht oder repariert werden muss und bei einer eigenen Hohlkammer, der Zugang zu dem Licht emittierenden Mittel oder der Druckerfassungseinrichtung einfacher ist.

In einer Ausführungsform der Erfindung ist eine weitere, hier vereinfacht als dritte Hohlkammer bezeichnete Hohlkammer in der Sicherheitsprofilleiste vorgesehen. Diese kann auch zum Einsatz kommen, wenn keine zweite Hohlkammer vorgesehen ist. In dieser Hohlkammer können Ultraschallsender und/oder -detektoren angeordnet sein, wobei diese Elemente natürlich genauso in der ersten oder der zweiten Hohlkammer gemeinsam mit anderen Bauteilen oder anderweitig im Bereich des Basiskörpers untergebacht angeordnet sein können. Ultraschallsensorik arbeitet berührungslos, ist unempfindlich gegenüber Staub oder Verschmutzung und kann Hindernisse zwischen Türen oder Fenstern sehr feinfühlig und effizient erkennen. In einem automatischen Türsystem kann der Ultraschallsender die Entfernung zum Hindernis (z. B. einer Hand) messen und die Tür entsprechend steuern, um Kollisionen zu vermeiden. Diese der Sicherheit dienenden Funktionen können mit den Signalfunktionen der Sicherheitsprofilleiste kombiniert werden.

Die Hohlkammern können verschiedenste Querschnitte aufweisen, zum Beispiel einen runden oder ovalen, einen rechteckigen, bevorzugt einen quadratischen, einen drei-, fünf oder sechseckigen Querschnitt. Dabei können alle Hohlkammern den gleichen Querschnitt aufweisen. Die Hohlkammern können aber auch zumindest teilweise verschiedene Querschnitte aufweisen. Bei runden Hohlkammern werden etwaige auf sie einwirkende Belastung gleichmäßig über die gesamte Fläche verteilt. Rechteckige Hohlkammern sind steifer und formstabiler als runde Hohlkammern. Aufgrund ihrer Form passen sie gut zu rechteckigen Öffnungen.

In einer Ausführung können die beschriebenen Hohlkammern länglich und/oder zylindrisch ausgebildet sein. Längliche Hohlkammern verteilen die Belastung gleichmäßig über ihre Länge. Die zylindrische Form ermöglicht eine gleichmäßige Wandstärke entlang der Hohlkammer.

Die Hohlkammern können mit Luft gefüllt und/oder an ihren Innenwänden beschichtet sein. Wenn die Hohlkammern mit Luft gefüllt sind, bieten sie zusätzliche Isolierung und Dämpfung. Beschichtungen können die Hohlkammern vor Korrosion schützen oder die Reibung reduzieren. Insbesondere können die opaken Abschnitte des Verbindungsabschnitts ganz oder teilweise mit einem hellen oder reflektierenden Material beschichtet sein, was eine Erhöhung der Lichtausbeute zur Folge hat.

Der Basiskörper und/oder die Abdeckung können bzw. kann wenigstens eine weitere in Abstrahlrichtung des Licht emittierenden Mittels liegende Kammer aufweisen, die zur Streuung des vom Licht emittierenden Mittel abgestrahlten Lichts dient. Alternativ oder zusätzlich dazu kann die weitere Kammer eine bestimmte Wandstärke, ein geeignetes Füllmaterial oder eine besondere Struktur aufweisen, um die Streuung zu ermöglichen.

In der Wahl des Licht emittierenden Mittels lassen sich vielfältige Ausführungsformen der Erfindung unterscheiden. Vorteilhaft aber nicht abschließend kann eine Ausstattung der Sicherheitsprofilleiste beispielsweise mit einem oder mehreren der Mittel, aus folgender Liste erfolgen: Das Licht emittierende Mittel kann eine Leuchtdiode (LED), organische Leuchtdiode (OLED), eine Seitenlichtfaser, einen Lichtleiter, ein lumineszierendes oder elektrolumineszierendes und/oder ein photolumineszierendes Material umfassen. Die Liste ist nicht erschöpfend, das Licht emittierende Mittel kann auch ein anderes, hier nicht genanntes, sein.

LEDs haben einen geringeren Stromverbrauch, was den Energieverbrauch reduziert. Sie sind außerdem langlebig, unempfindlich (z. B. gegenüber Stößen), sofort nach dem Einschalten in voller Helligkeit verfügbar und erzeugen ein flimmerfreies Licht. Seitenlichtfasern sind so konzipiert, dass das im Kern geführte Licht nicht nur entlang der Faser weitergeleitet wird, sondern seitlich abgestrahlt wird. Dadurch kann das Licht räumlich verteilt werden. Seitenlichtfasern reduzieren die direkte Lichtstrahlung von der Lichtquelle und sorgen für eine angenehmere Beleuchtung. Lichtleiter ermöglichen die effiziente Übertragung von Licht über längere Strecken. Lichtleiter minimieren Lichtverluste und bieten eine hohe Signalqualität. Lumineszierende Materialien emittieren Licht nach Energiezufuhr, z. B. durch chemische Reaktionen (Chemolumineszenz). Lumineszenzmaterialien haben eine lange Haltbarkeit und sind vielseitig einsetzbar.

Die Erfindung umfasst auch die Anordnung einer erfindungsgemäßen Sicherheitsprofilleiste an einer Tür oder einem Fenster. Hierbei kann die Sicherheitsprofilleiste insbesondere an der Hauptschließkante, aber auch an jeder Nebenschließkante angeordnet werden. Durch die Sicherheitsprofilleiste wird verhindert, dass Finger oder andere Körperteile beispielweise zwischen dem Türflügel und dem Türrahmen eingeklemmt werden. Die Nebenschließkante ermöglicht zusätzlichen Schutz, insbesondere wenn der Türflügel seitlich bewegt wird. Wenn beide Kanten mit einer Sicherheitsprofilleiste ausgerüstet sind, kann eine umfassende Sicherheit gewährleistet werden. Dabei ermöglicht die Integration des lichtemittierenden Mittels die Möglichkeit einer optischen Signalgebung und kann so z. B. zur weiteren Erhöhung der Sicherheit beitragen.

Weiter von der vorliegenden Erfindung umfasst ist auch ein Schienenfahrzeug wie eine Vollbahn, eine Tram oder eine Metro, aber auch ein Straßenfahrzeug wie ein Bus.

Zudem umfasst die Erfindung auch ein Verfahren zur Herstellung einer solchen Sicherheitsprofilleiste. Dieses Verfahren umfasst mindestens die Verfahrensschritte - Bereitstellen eines Basiskörpers mit einem Verbindungsabschnitt, Bereitstellen einer wenigstens teilweise transluzenten und von dem Basiskörper separaten Abdeckung mit einem Gegenverbindungsabschnitt, Bereitstellen eines Licht emittierenden Mittels und Verbinden des Verbindungsabschnitts und des Gegenverbindungsabschnitts unter Schaffung einer Hohlkammer, in der das Licht emittierende Mittel im Längsquerschnitt der Sicherheitsprofilleiste gesehen eingeschlossen ist. Alle in bevorzugten Varianten innerhalb dieser Anmeldung erwähnten Ausführungen sind analog durch Varianten des mitgeschützten Verfahrens herstellbar und geschützt.

Für bevorzugte Ausführungsformen des erfindungsgemäßen Verfahrens, des erfindungsgemäßen Schienen- oder Straßenfahrzeugs und des erfindungsgemäßen Fensters bzw. der erfindungsgemäßen Tür gelten die Ausführungen zu der erfindungsgemäßen Sicherheitsprofilleiste entsprechend.

### FIGURENBESCHREIBUNG

Weitere bevorzugte Ausführungsformen ergeben sich aus den Figuren.

Es zeigt:
- Figur 1: ein Ausführungsbeispiel einer erfindungsgemäßen Sicherheitsprofilleiste in einer Querschnittsansicht;
- Figur 2: ein Ausführungsbeispiel einer erfindungsgemäßen Sicherheitsprofilleiste in einer Querschnittsansicht mit aufgebrachter Abdeckung,
- Figur 3: eine isometrische Ansicht einer erfindungsgemäßen Sicherheitsprofilleiste,
- Figur 4: eine isometrische Ansicht einer erfindungsgemäßen Sicherheitsprofilleiste,
- Figur 5: ein Ausführungsbeispiel einer beidseitigen Sicherheitsprofilleiste in einer Querschnittsansicht mit aufgebrachter Abdeckung,

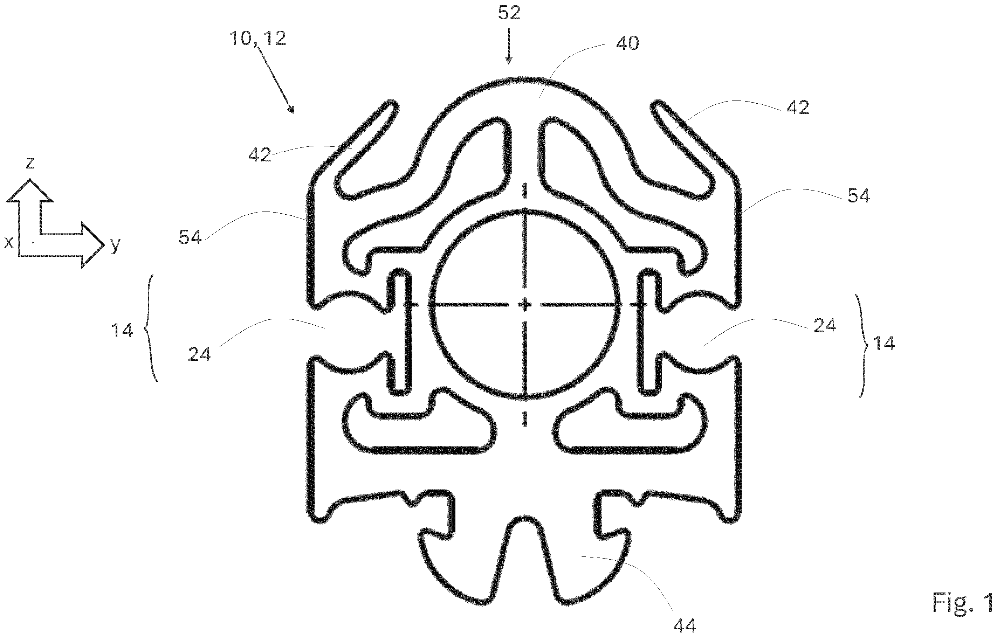

Figur 1 zeigt eine Sicherheitsprofilleiste (10) für eine Tür im Querschnitt quer zur Längsrichtung (x) der Sicherheitsprofilleiste (10). Die Sicherheitsprofilleiste (10) weist einen Basiskörper (12) auf, der das Hauptgerüst der Sicherheitsprofilleiste (10) darstellt. Er enthält mindestens einen Verbindungsabschnitt (14), der zur Befestigung dient. Die Sicherheitsprofilleiste (10) weist mindestens eine Ausnehmung (24) auf, deren Funktion es ist, ein Licht emittierendes Mittel aufzunehmen. Weitere Ausnehmungen in Figur 1 sind beispielsweise Hohlräume ohne Funktion, die nicht gebraucht werden und Material einsparen oder für einen späteren Gebrauch reserviert werden. Die Sicherheitsprofilleiste (10) ist mittels eines Profilfußes (44) in zugehörigen Ausnehmungen und Halterungsvorsprüngen eines Türprofils befestigbar. An der dem Profilfuß (44) gegenüberliegenden Stirnseite (52) befindet sich jeweils seitlich eine Dichtlippe (42), die von der Profilaußenseite (54) schräg nach vorne und innen absteht. Zwischen den Dichtlippen (42) befindet sich mittig eine bewegliche Lippe (40), die mit jeweils einer Dichtlippe (42) einen Raum begrenzt. Die bewegliche Lippe (40) und die Dichtlippen (42) dichten die Tür gegen Zugluft und/oder Lärm ab und dienen außerdem der Sicherheit. Die Sicherheitsprofilleiste (10) in Figur 1 weist auf jeder Profilaußenseite (54) jeweils eine Ausnehmung (24) auf.

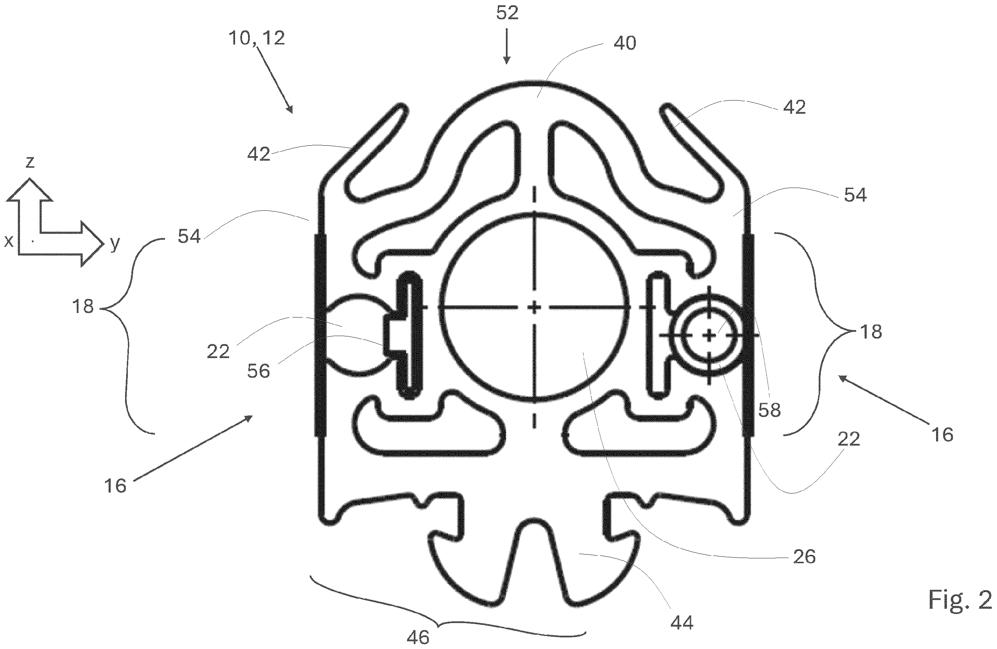

Figur 2 zeigt ebenfalls eine Sicherheitsprofilleiste (10) für eine Tür (50) eines Transportmittels im Querschnitt quer zur Längsrichtung (x), also in der y-z-Ebene. Bei dem in Figur 2 gezeigten Ausführungsbeispiel wurde jeweils eine Abdeckung (16) mit einem Gegenverbindungsabschnitt (18) auf den beiden Ausnehmungen (24) appliziert und stoffschlüssig befestigt. Die Abdeckungen (16) mit ihren Gegenverbindungsabschnitten (18) decken die Ausnehmungen (24) so ab, dass erste Hohlkammern (22) entstehen. Es ist ein Verankerungsabschnitt (46) zur Verankerung der Sicherheitsprofilleiste (10) in einem Türprofil einer Tür vorgesehen, der stoff- oder kraftschlüssig in das Türprofil eingreift. Ein Licht emittierendes Mittel kann durch die transluzenten Abdeckungen (16) in den Außen- (links) und den Innenbereich (rechts) des Transportmittels Licht emittieren. In diesem Ausführungsbeispiel ist linksseitig ein LED-Streifen (56), rechtsseitig ein Seitenlichtleiter (58) ersichtlich, die jeweils aus der ersten Hohlkammer (22) hinaus durch die Abdeckung (16) hindurch in einen dahinter liegenden Bereich strahlen. Im Querschnittszentrum ist eine zweite Hohlkammer (26) zu sehen, die Platz bietet für eine Druck- oder Seitensichtleitersensorik, die die Funktion der Sicherheitsöffnung bei einem möglichen Einklemmen gewährleisten kann.

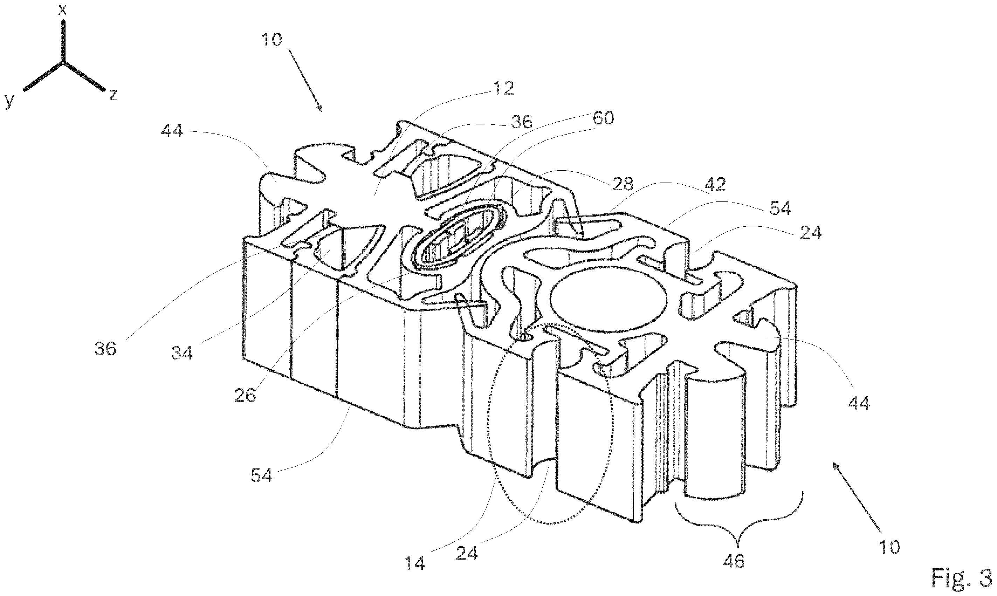

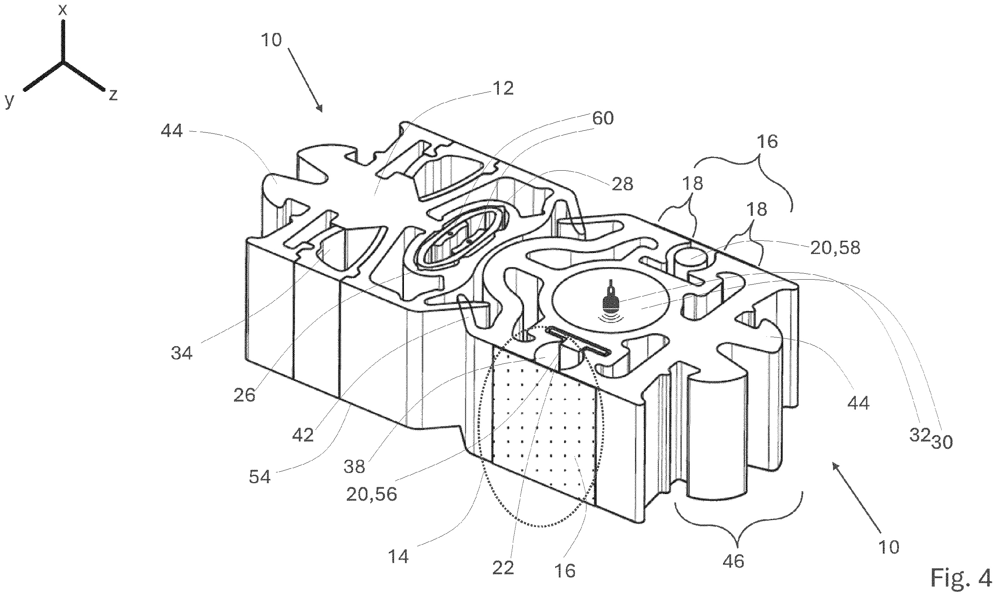

In den Figuren 3 und 4 ist eine umfangreichere, multifunktionale Sicherheitsprofilleiste (10) dargestellt, die neben der Ausnehmung (24) für das Licht emittierende Mittel eine zweite Hohlkammer (26) für eine Druckerfassungseinrichtung (28) oder einen elektrischen Kontaktgeber (28) vorsieht. Sobald eine Berührung der Sicherheitsprofilleiste (10) durch eine Person oder einen Gegenstand und damit ein mögliches Einklemmen stattfindet, verformt sich die Sicherheitsprofilleiste (10) im Bereich der Stirnseite (52). Diese Verformung führt z.B. dazu, dass die elektrischen Kontakte (60) des elektrischen Kontaktgebers (28) zusammengeführt werden, was einen Schaltvorgang auslöst. Der ausgelöste Schaltvorgang führt zu einem Signal, das an die Steuerung der Tür gesendet wird, um die Bewegung sofort zu stoppen und ein Einklemmen zu verhindern. Diese Funktion kann - anders als hier gezeigt - auch gemeinsam in derselben Hohlkammer wie das Licht emittierende Mittel untergebracht werden.

Figur 3 zeigt eine zweiteilige an zwei Türflügeln angebrachte Sicherheitsprofilleiste (10) mit Ausnehmungen (24) für das Licht emittierende Mittel und zweiter Hohlkammer (26) für den elektrischen Kontaktgeber (28), bevor die Abdeckung auf der Ausnehmung (24) befestigt wird. Die beiden Sicherheitsprofilleisten (10) sind in dieser Darstellung zusammengefügt, es handelt sich also um einen geschlossenen Türzustand. Der Verbindungsabschnitt (14) ist ein nicht klar abgegrenzter Bereich um die Ausnehmung (24) herum, welcher gestrichelt dargestellt ist. In der Ansicht von Figur 4 wurde er mit dem Gegenverbindungsabschnitt (18) der Abdeckung (16) in Verbindung gebracht.

Figur 4 zeigt eine ebensolche zweiseitige Sicherheitsprofilleistenkonstruktion mit aufgebrachter Abdeckung (16), deren Gegenverbindungsabschnitt (18) mit dem Verbindungsabschnitt (14) des Basiskörpers (10) verbunden ist. Der Gegenverbindungsabschnitt (18) ist derjenige Teil der Abdeckung (16), welcher mit dem Verbindungsabschnitt (14) des Basiskörpers (12) in Verbindung gebracht wird. Wie in Figur 4 kann die Abdeckung (16) beispielsweise zwei voneinander getrennte Gegenverbindungsabschnittsteile enthalten, die durch einen Teil der Abdeckung (16), welcher nicht mit dem Basiskörper (12) verbunden ist, unterbrochen werden. Die Licht emittierenden Mittel (20) sind als LED-Streifen (56) und Seitenlichtleiter (58) analog zu Figur 2 im rechten dargestellten Profil beidseitig, das heißt nach außen wie nach innen strahlend, angeordnet. Von der Erfindung umfasst ist auch eine Ausführungsvariante, bei der in der linken Sicherheitsprofilleiste (10), in einem Hohlraum wie der verformungsführenden Kammer (34) ebenfalls Licht emittierende Mittel (20) angeordnet sein können.

Neben der ersten (22) und zweiten Hohlkammer (26) kann auch eine dritte Hohlkammer (30) vorgesehen sein, die beispielsweise einen Ultraschalldetektor oder -sender (32) aufnimmt. Dieser wird häufig statt des oder auch zusätzlich zum elektrischen Kontaktgeber (28) verwendet, sodass der Ultraschalldetektor oder - sender (32) natürlich auch statt des elektrischen Kontaktgebers (28) in der zweiten Hohlkammer (26) angeordnet sein könnte.

Neben den bereits erwähnten funktionalen Hohlkammern (22, 26, 30) existieren zumeist, wie auch in den gezeigten Figuren 1-5, weitere Hohlräume in der Sicherheitsprofilleiste (10), sogenannte verformungsführende Hohlkammern (34), die durch Stege (36) unterteilt sind. Diese verformungsführenden Hohlkammern (34) sind so gestaltet, dass sie sich bei einem Aufprall oder unter äußerem Druck verformen können. Sie absorbieren und verteilen die Energie des Aufpralls oder Drucks, wodurch die Belastung auf die gesamte Struktur der Sicherheitsprofilleiste (10) reduziert wird. Dies hilft, Schäden an der Tür und Verletzungen zu verhindern. Die Stege (36) sind die Trennwände zwischen den Hohlkammern (22, 26, 30, 34). Sie verleihen der Sicherheitsprofilleiste (10) zusätzliche Stabilität und Festigkeit. Durch die Unterteilung der Hohlkammern (22, 26, 30, 34) sorgen die Stege (36) dafür, dass die Verformung kontrolliert und gleichmäßig erfolgt. Sie verhindern, dass die Hohlkammern (22, 26, 30, 34) kollabieren, was die Energieabsorption und die Schutzfunktion der Sicherheitsprofilleiste (10) verbessert.

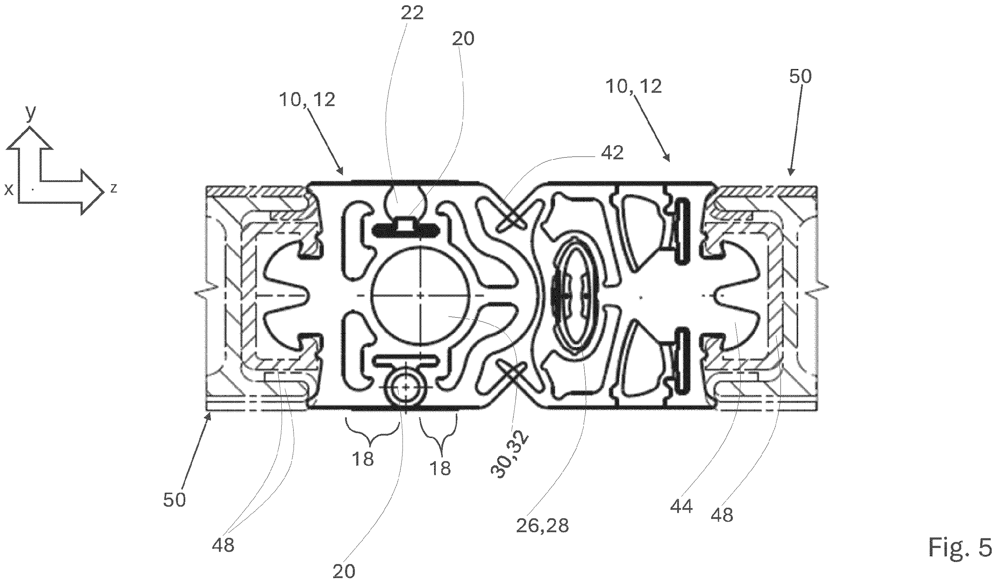

Figur 5 zeigt die in den Figuren 3 und 4 abgebildete doppelte Sicherheitsprofilleiste in einem äußeren Türprofil (48) integriert in einer Querschnittsansicht quer zur Längsrichtung. Hierbei greift der Profilfuß (44) des männlichen Verankerungsabschnittes (46) in eine entsprechend dafür vorgesehene weibliche Ausnehmung in dem Türprofil (48) der Tür (50) ein. Die in der Beschreibung der vorigen Figuren erläuterten Bauteile sind auch hier erkennbar, wie erste Hohlkammer (22) mit dem Licht emittierendem Mittel (20) auf der linken Seite der Figur 5 in einem Türprofil (48) verankert und in Eingriff gebracht bei geschlossener Tür (50) mit einer in einem weiteren oder bei u-förmigem Türprofil dem gleichen Türprofil befestigten weiteren Sicherheitsprofilleiste (10) auf der rechten Seite der Figur mit einer zweiten Hohlkammer (26), in die ein elektrischer Kontaktgeber (28) eingebracht ist. Aus dem in dieser Figur links dargestellten Bereich wird Licht emittiert, was nach innen in den Innenbereich eines Transportmittels und/oder nach außen, in den Außenbereich eines Transportmittels möglich ist. Die transluzente Abdeckung (16), hier in Form einer Folie, sorgt für den nötigen Vandalismusschutz und sichert das Licht emittierende Mittel (20) im Inneren der Sicherheitsprofilleiste (10) ab.

Von der Erfindung umfasst ist auch eine Ausführungsform, bei der in beiden Teilen der Sicherheitsprofilleiste, links wie rechts, jeweils eine erste Hohlkammer oder zwei erste Hohlkammern (22) mit Licht emittierendem Mittel (20) und randseitig applizierter Abdeckung (16) vorgesehen ist.

### Bezugszeichenliste

- 10: Sicherheitsprofilleiste
- 12: Basiskörper
- 14: Verbindungsabschnitt
- 16: Abdeckung
- 18: Gegenverbindungsabschnitt
- 20: Licht emittierendes Mittel
- 22: (erste) Hohlkammer
- 24: Ausnehmung
- 26: (zweite) Hohlkammer
- 28: Druckerfassungseinrichtung, elektrischer Kontaktgeber
- 30: (dritte) Hohlkammer
- 32: Ultraschalldetektor oder -sender
- 34: Verformungsführende Hohlkammer
- 36: Steg
- 38: Innenwand
- 40: Bewegliche Lippe
- 42: Dichtlippe
- 44: Profilfuß
- 46: Verankerungsabschnitt
- 48: Türprofil
- 50: Tür, Türelement
- 52: Stirnseite
- 54: Profilaußenseite
- 56: LED-Streifen
- 58: Seitenlichtleiter
- 60: elektrische Kontakte
- x: Längsrichtung
- y: Querrichtung/Breite
- z: Höhe

## Patentansprüche

1. Sicherheitsprofilleiste (10) für eine Tür (50) oder ein Fenster eines Transportmittels, eines Bahn- oder Bussteiges oder für ein Tor oder eine Schranke,
wobei die Sicherheitsprofilleiste (10) einen Basiskörper (12) aufweist,
wobei der Basiskörper (12) mindestens einen Verbindungsabschnitt (14) aufweist,
wobei die Sicherheitsprofilleiste (10) wenigstens ein Licht emittierendes Mittel (20) aufweist,
wobei die Sicherheitsprofilleiste (10) eine wenigstens teilweise transluzente und von dem Basiskörper separate Abdeckung (16) aufweist, welche mindestens einen Gegenverbindungsabschnitt (18) umfasst,
wobei der Verbindungsabschnitt (14) und der Gegenverbindungsabschnitt (18) miteinander verbunden sind,
wobei zumindest eine Oberfläche des Basiskörpers (12) und die Abdeckung (16) eine erste Hohlkammer (22) definieren, in der das Licht emittierende Mittel (20) der Sicherheitsprofilleiste (10) aufgenommen ist.

2. Sicherheitsprofilleiste (10) nach Anspruch 1, wobei die Verbindung zwischen dem Verbindungsabschnitt (14) und dem Gegenverbindungsabschnitt (18) stoffschlüssig und/oder formschlüssig ist.

3. Sicherheitsprofilleiste (10) nach einem der vorherigen Ansprüche, wobei in dem Basiskörper (12) wenigstens eine randseitige Ausnehmung (24) ausgebildet ist, in welcher das wenigstens eine Licht emittierende Mittel (20) angeordnet ist, wobei der Verbindungsabschnitt (14) bevorzugt in Längsrichtung gesehen auf beiden Seiten und jeweils benachbart zu der Ausnehmung (24) vorgesehen ist.

4. Sicherheitsprofilleiste (10) nach einem der vorherigen Ansprüche, wobei in dem Basiskörper (12) mehrere, bevorzugt drei, bevorzugter vier randseitige Ausnehmungen (24) ausgebildet sind, die insbesondere parallel und beabstandet zueinander in Längsrichtung des Basiskörpers (12) angeordnet sind.

5. Sicherheitsprofilleiste (10) nach einem der vorherigen Ansprüche, wobei die Abdeckung (16) und/oder der Basiskörper (12) aus einem elastischen Material hergestellt ist.

6. Sicherheitsprofilleiste (10) nach einem der vorherigen Ansprüche, wobei der Basiskörper (12) und/oder die Abdeckung (16) teilweise aus einem opaken Material bestehen/besteht.

7. Sicherheitsprofilleiste (10) nach einem der vorherigen Ansprüche, wobei die erste Hohlkammer (22) in dem Querschnitt quer zur Längsrichtung gesehen über ihren Umfang durch mehrere, bevorzugt drei, bevorzugter vier, bevorzugter eine Vielzahl von transluzenten und/oder opaken Abschnitten begrenzt ist.

8. Sicherheitsprofilleiste (10) nach einem der vorherigen Ansprüche, wobei die Sicherheitsprofilleiste (10) eine Druckerfassungseinrichtung und/oder einen elektrischen Kontaktgeber (28) in einer zweiten Hohlkammer (26) und/oder mit in der ersten Hohlkammer (22) aufnimmt.

9. Sicherheitsprofilleiste (10) nach einem der vorherigen Ansprüche, wobei die Sicherheitsprofilleiste (10) einen Ultraschallsender und/oder einen Ultraschalldetektor (32) in einer dritten Hohlkammer (30) und/oder mit in der ersten (22) und/oder zweiten Hohlkammer (26) aufnimmt.

10. Sicherheitsprofilleiste (10) nach einem der vorherigen Ansprüche, wobei eine oder mehrere der Hohlkammern (22, 26, 30)
- einen runden oder ovalen Querschnitt und/oder
- einen rechteckigen, bevorzugt einen quadratischen Querschnitt, und/oder
- einen drei-, bevorzugt einen fünfeckigen, bevorzugter einen sechseckigen Querschnitt aufweist/aufweisen.

11. Sicherheitsprofilleiste (10) nach einem der vorherigen Ansprüche, wobei eine oder mehrere der Hohlkammern (22, 26, 30)
- eine längliche Form aufweist/aufweisen und/oder
- zylindrisch ausgebildet ist/sind und/oder
- mit Luft gefüllt ist/sind und/oder
- an einer oder mehreren ihrer Innenwände (38) beschichtet ist/sind.

12. Sicherheitsprofilleiste (10) nach einem der vorherigen Ansprüche, wobei das Licht emittierende Mittel (20) mindestens eine (organische) Leuchtdiode, eine Seitenlichtfaser, einen Lichtleiter, ein lumineszierendes oder elektrolumineszierendes oder ein photolumineszierendes Material umfasst.

13. Fenster- oder Türelement (50) mit einer Sicherheitsprofilleiste (10) nach einem der Ansprüche 1-12, insbesondere an der Hauptschließkante und/oder mindestens an einer der Nebenschließkanten einer Tür (50) oder eines Fensters angeordnet.

14. Schienen- oder Straßenfahrzeug oder Bahn- oder Bussteig mit einem Fenster- oder Türelement (50) nach Anspruch 13.

15. Verfahren zur Herstellung einer Sicherheitsprofilleiste (10) für eine Tür (50) oder ein Fenster eines Transportmittels oder eines Bahn- oder Bussteiges oder für ein Tor oder eine Schranke,
wobei das Verfahren mindestens die folgenden Schritte umfasst:
- Bereitstellen eines Basiskörpers (12) mit einem Verbindungsabschnitt (14);
- Bereitstellen einer wenigstens teilweise transluzenten und von dem Basiskörper (12) separaten Abdeckung (16) mit einem Gegenverbindungsabschnitt (18);
- Bereitstellen eines Licht emittierenden Mittels (20)
- Verbinden des Verbindungsabschnitts (14) und des Gegenverbindungsabschnitts (18) unter Schaffung einer Hohlkammer (22), in der das Licht emittierende Mittel (20) im Querschnitt quer zur Längsrichtung der Sicherheitsprofilleiste (10) gesehen eingeschlossen ist.
